(19) Europäisches Patentamt
European Patent Office
Office européen des brevets

(11) **EP 3 771 727 B1**

(12) **EUROPÄISCHE PATENTSCHRIFT**

(45) Veröffentlichungstag und Bekanntmachung des Hinweises auf die Patenterteilung:
**23.03.2022   Patentblatt 2022/12**

(21) Anmeldenummer: **19189591.1**

(22) Anmeldetag: **01.08.2019**

(51) Internationale Patentklassifikation (IPC):
**C08L 95/00** *(2006.01)*       **C08L 19/00** *(2006.01)*
**C08L 17/00** *(2006.01)*       **C08K 5/372** *(2006.01)*

(52) Gemeinsame Patentklassifikation (CPC):
(C-Sets verfügbar)
**C08L 95/00; C08L 17/00;** C08L 19/00;
C08L 2555/30; C08L 2555/34; C08L 2555/50
(Forts.)

(54) **GUMMIMODIFIZIERTE BITUMEN, VERFAHREN ZUR HERSTELLUNG UND DESSEN VERWENDUNG IM ASPHALT**

RUBBER-MODIFIED BITUMEN, METHOD FOR ITS PREPARATION AND ITS USE IN ASPHALT

BITUME MODIFIÉ PAR DU CAOUTCHOUC, PROCÉDÉ POUR SA FABRICATION ET SON UTILISATION DANS L'ASPHALTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.02.2021   Patentblatt 2021/05**

(73) Patentinhaber: **LANXESS Deutschland GmbH 50569 Köln (DE)**

(72) Erfinder:
• **KLEIN, Thomas**
  **69126 Heidelberg (DE)**
• **Rossrucker, Thomas**
  **76684 Östringen (DE)**
• **Horstmann, Sandra**
  **67141 Neuhofen (DE)**
• **Kusterer, Svenja**
  **68219 Mannheim (DE)**

(56) Entgegenhaltungen:
EP-A1- 2 164 895       EP-A1- 3 133 114
WO-A1-2011/138412

• **RAJAN V V ET AL: "Science and technology of rubber reclamation with special attention to NR-based waste latex products", PROGRESS IN POLYMER SCIENCE, PERGAMON PRESS, OXFORD, GB, Bd. 31, Nr. 9, 1. September 2006 (2006-09-01), Seiten 811-834, XP027932385, ISSN: 0079-6700 [gefunden am 2006-09-01]**
• **ABELE M ET AL: "Neue Erkenntnisse auf dem Gebiet der chemisch beschleunigten Mastikation", KAUTSCHUK UND GUMMI - KUNSTSTOFFE, HUTHIG VERLAG, HEIDELBERG, DE, Bd. 42, Nr. 3, 1. Januar 1989 (1989-01-01) , Seiten 209-216, XP002163374, ISSN: 0948-3276**

(52) Gemeinsame Patentklassifikation (CPC): (Forts.)

C-Sets
**C08L 95/00, C08K 5/372, C08L 19/00**

**Beschreibung**

Die vorliegende Erfindung betrifft neue gummimodifizierte Bitumen, verbesserte Verfahren zur Herstellung unter Einsatz von vulkanisiertem Gummi und dessen Verwendung im Asphalt.

**Stand der Technik**

Gummimodifiziertes Bitumen, sog. veredeltes Bitumen, weist gegenüber unmodifiziertem Bitumen den Vorteil der konstanten viskoelastischen Eigenschaften bei Variation der Temperatur auf: So ist es in großer Hitze nicht so weich und bei tiefen Temperaturen nicht so brüchig und verfügt auch über eine erhöhte Lebensdauer.

Gummimodifiziertes Bitumen kann dabei durch Zumischen eines unvernetzten Elastomers oder eines schwefelvernetzten Gummis hergestellt werden. Die Zugabe von unvernetztem Elastomer erfordert u.U. eine anschließende Vernetzung mit Schwefel oder Polysulfiden, siehe US-A 4 554 313. Dieser Weg ist schon alleine durch die eingesetzten Materialien sehr teuer.

Aufgrund der hohen Kosten für die Elastomere hat man sich in der Vergangenheit der in großen Menge anfallenden Gummireifen, d.h. schwefelvernetztem Gummi als Quelle für einen Ersatzstoff bedient.

Allerdings ist schwefelvulkanisiertes (vernetztes) Gummi in Bitumen relativ unlöslich, so dass dessen Wiederverwertung in Bitumen problematisch ist (Shell Bitumen Handbook, Shell UK, 2003 ISBN 0 7277 3220 X, Seite 79). Bitumen wird heiß gelagert bzw. transportiert, wobei die Homogenität gewahrt bleiben muss. Eingemischte, schlecht lösliche oder schlecht dispergierbare Elastomere oder auch schwefelvernetztes Gummi setzen sich in der heiß gelagerten Mischung ab. Die anwendungstechnischen Eigenschaften von modifiziertem Bitumen aus unterschiedlichen Lagerzonen unterscheiden sich, so dass sich Qualitätsprobleme beim Straßenbau ergeben. Der Sinn des Zusatzes von Elastomeren ist mit möglichst wenig zugegebenem Material einen möglichst großen Effekt hinsichtlich der Verbesserung der elastischen Eigenschaften zu erzielen. Die Elastizität des Gummis und des damit modifizierten Bitumens ist abhängig von der Zahl der Schwefelbrücken, welche bei der Vulkanisation entstanden sind. Durch die Devulkanisation werden die Schwefelbrücken und damit die Elastizität verringert.

Aus EP-A3337851 ist bekannt, vulkanisiertes Gummi bei Temperaturen von mindestens 140°C mit weniger als 5 Gew. % an Dialkylpolysulfid zu devulkanisieren, um die Löslichkeit von Gummi in heißem Bitumen zu steigern, allerdings sind die elastischen Eigenschaften des so modifizierten Bitumens bei Temperaturen von mehr als 60°C, in der Regel 60 bis 70°C, auf der Straße noch unbefriedigend.

**Aufgabe der vorliegenden Erfindung**

Ausgehend vom oben beschriebenen Stand der Technik bestand die Aufgabe der vorliegenden Erfindung darin, gummimodifiziertem Bitumen bereitzustellen, welches bei Temperaturen von 60°C und darüber hinaus verbesserte elastische Eigenschaften aufweist.

Überraschenderweise wurde gefunden, dass diese Aufgabe gelöst werden kann, wenn eine Mischung aus vulkanisiertem Gummi und $C_1$-$C_{18}$-Dialkylpolysulfiden bei Temperaturen von 130-150°C für weniger als 20 Minuten getempert und anschließend dem Bitumen zugemischt wird.

**Gegenstand der Erfindung**

Gegenstand der vorliegenden Erfindung ist gummimodifiziertes Bitumen erhältlich dadurch, dass

a) vulkanisiertes Gummi mit 1 bis 5 Gew. % mindestens eines Dialkylpolysulfids der Formel (I)

$$R^1\text{-}S_xR^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht, unter mechanischer Beanspruchung vermischt und auf Temperaturen von 130°C erwärmt wird,

b) das Reaktionsprodukt aus a) bei 130-150°C für weniger als 20 Minuten, vorzugsweise 1 bis 18 Minuten, getempert wird und

c) das Reaktionsprodukt aus b) mit Bitumen vermischt wird.

**Bevorzugte Ausführungsformen der Erfindung**

**Schritt a)**

Bei dem vulkanisierten Gummi handelt es sich um Schwefel-vernetzte Kautschuke auf Basis von Polydienen der R-Gruppe, umfassend Naturkautschuke (NR), Butadien-Kautschuke (BR), Styrol-Butadien-Kautschuke (SBR), Acrylnitril-Butadien-Kautschuke (NBR) und Butylkautschuke (IIR), um Vulkanisate aus Kautschuken mit wenigen Doppelbindungen oder doppelbindungsfreien Polymerhauptketten aus der M-Gruppe, umfassend Ethylen-Propylen-Dien-Kautschuk (EPDM), und Mischungen aus den vorgenannten Kautschuken der R- und M-Gruppe.

Das vulkanisierte Gummi wird vorzugsweise in einer Partikelgröße von 0,15 bis 3 mm, besonders bevorzugt 0,2 - 1mm, eingesetzt.

Hierzu kann es notwendig sein, das vulkanisierte Gummi zu zerkleinern. Dies erfolgt idealerweise mittels Schreddern und Mühlen und/oder Schneidwerkzeugen. Hierfür einsetzbar sind vorzugsweise 2-Wellenschredder und Schneidmühlen.

Bei den eingesetzten Dialkylpolysulfiden handelt es sich um Verbindungen der allgemeinen Formel (I),

$$R^1\text{-}S_x\text{-}R^2 \qquad (1),$$

worin vorzugsweise

$R^1$ und $R^2$ gleich oder verschieden sind und für einen linearen oder verzweigten $C_5$-$C_{18}$-Alkylrest stehen und x für die Zahlen 3 bis 8 steht.

Ebenfalls bevorzugt ist, wenn als Dialkylpolysulfide solche eingesetzt werden, in denen x in der allgemeinen Formel (I) für die Zahlen 3 bis 5 steht und $R^1$ und $R^2$ in der allgemeinen Formel für lineare oder verzweigte $C_5$- bis $C_{15}$-Alkylreste stehen.

Die Dialkylpolysulfide können sowohl einzeln als auch als Gemisch in beliebiger Abmischung untereinander in dem erfindungsgemäßen Verfahren eingesetzt werden.

In einer weiteren Ausführungsform der Erfindung sind als Dialkylpolysulfid der Formel (I) Dioctylpentasulfid und/oder Dioctyltetrasulfid bevorzugt, besonders bevorzugt Dioctylpentasulfid und/oder Dioctyltetrasulfid, dessen C8-Alkyl verzweigt ist.

Bei den vorgenannten Dialkylpolysulfiden handelt es sich um kommerziell verfügbare Produkte.

Die Menge an Dialkylpolysulfid beträgt vorzugsweise 1,5 bis 3 Gew.%, besonders bevorzugt 1,7 bis 2,5 Gew.%, bezogen auf die Menge an vulkanisiertem Gummi.

Die Temperaturen in Schritt a) liegen vorzugsweise bei bis zu 130°C. Das Aufwärmen auf 130°C kann dabei mit beliebigen Aufheizraten erfolgen.

Schritt a) kann sowohl bei Normaldruck als auch bei erhöhtem Druck durchgeführt werden. Ein bevorzugter Druck liegt bei 1 bis 20 bar, besonders bevorzugter Druck bei 1 bis 10 bar und ganz besonders bevorzugt bei 1 bis 3 bar.

In Schritt a) wird das vulkanisierte Gummi vorzugsweise in Form von Partikeln bei Temperaturen von 0 bis 30°C vorgelegt. In einer weiteren bevorzugten Ausführungsform der Erfindung erfolgt im Anschluss daran die Zudosierung des Dialkylpolysulfids unter mechanischer Beanspruchung. Diese Mischung wird vorzugsweise nach der Dosierung auf 130°C erwärmt.

Es ist aber auch möglich, das vulkanisierte Gummi, vorzugsweise in Form von Partikeln, bei Temperaturen von 0 bis 30°C vorzulegen und während des Aufheizens auf 130°C das Dialkylpolysulfid zu zudosieren.

Die Dosierung des Dialkylpolysulfids erfolgt dabei vorzugsweise über eine Düse.

Mechanische Beanspruchung im Sinne der Erfindung bedeutet den Einsatz von Mischaggregaten, wie vorzugsweise Extruder, Innenmischer, Hochdruck-Homogenisatoren, wie insbesondere Hochschermischgeräte, wie z. B. Ultra-Turrax®, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z.B. ein Ultra-Turrax®, besonders bevorzugt oder auch ein Ankerrührer mit mindestens 2 Flügeln.

Exemplarisch genannt sind nachfolgend Doppelschneckenextruder oder Planetwalzenextruder.

Im Fall des Einsatzes eines Innenmischers zur mechanischen Beanspruchung sind Innenmischer mit ineinandergreifenden oder mit tangierenden Rotoren bevorzugt. Dabei ist ein Innenmischer mit ineinander greifenden Rotoren besonders bevorzugt, da auf diese Weise mehr Scherenergie eingebracht werden kann.

Die Rührgeschwindigkeit kann in Abhängigkeit von der Viskosität des gummimodifizierten Bitumens (GmB) eingestellt werden, bei einem Ankerrührer mit mindestens 2 Flügeln liegt die Rührgeschwindigkeit vorzugsweise bei 150 rpm bis 500 rpm, besonders bevorzugt 180-250 rpm.

**Schritt b)**

In Schritt b) wird das Reaktionsprodukt aus a) vorzugsweise bei 135 bis 150°C für 1 bis weniger als 20 Minuten, vorzugsweise 1 bis 18 Minuten, getempert.

In einer besonders bevorzugten Ausführungsform der Erfindung beträgt die Temperzeit in Schritt b) 5 bis einschließlich 15 Minuten. Die bevorzugte Temperatur in Schritt b) liegt vorzugsweise bei 140-145°C.

In einer weiteren Ausführungsform der Erfindung erfolgt Schritt b) unter mechanischer Beanspruchung.

**Schritt c)**

Das in Schritt c) eingesetzte Bitumen bezeichnet ein sowohl natürlich vorkommendes als auch durch Destillation aus Erdöl gewonnenes Gemisch aus verschiedenen organischen Stoffen. Aufgrund der biologischen Herkunft besteht Bitumen hauptsächlich aus Kohlenstoff und Wasserstoff. Es ist ein schwer flüchtiges, dunkelfarbiges Vielstoffgemisch organischer Substanzen, dessen elastoviskoses Verhalten sich mit der Temperatur ändert Als Bitumen im Sinne der Erfindung sind alle handelsüblichen Bitumenarten, wie z.B. 50/70 oder 70/100 einsetzbar. Dies umfasst vorzugsweise Straßenbaubitumen nach DIN EN 12591.

Das Einmischen des Bitumen in Schritt c) erfolgt vorzugsweise unter mechanischer Beanspruchung, die wie in Schritt a) beschrieben mittels Mischaggregaten, wie vorzugsweise Extruder, Innenmischer, Hochdruck-Homogenisatoren, wie insbesondere Hochschermischgeräte, wie z. B. Ultra-Turrax®, Kneter und/oder Walzwerk erfolgen kann. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z.B. ein Ultra-Turrax®, besonders bevorzugt oder auch ein Ankerrührer mit mindestens 2 Flügeln.

Exemplarisch als bevorzugt genannt sind nachfolgend Doppelschneckenextruder oder Planetwalzenextruder.

Im Fall des Einsatzes eines Innenmischers zur mechanischen Beanspruchung sind Innenmischer mit ineinandergreifenden oder mit tangierenden Rotoren bevorzugt. Dabei ist ein Innenmischer mit ineinander greifenden Rotoren besonders bevorzugt, da auf diese Weise mehr Scherenergie eingebracht werden kann.

Die Rührgeschwindigkeit wird vorzugsweise auf mindestens 180 rpm eingestellt, vorzugsweise mit einem Flügelrührer.

Die Temperatur in Schritt c) beträgt vorzugsweise 140 bis 180°C. Die Mischzeit unter mechanische Beanspruchung beträgt vorzugsweise 15 bis 120 Minuten besonders bevorzugt 30 bis 60 Minuten.

In einer weiteren bevorzugten Ausführungsform der Erfindung wird das mit Bitumen gemischte Reaktionsprodukt aus Schritt c) anschließend bis zu 60 Minuten bei 140 bis 180°C stehen gelassen ("Reifezeit"), um den Löseprozeß zu vervollständigen.

Die Herstellung des gummimodifizierten Bitumens erfolgt vorzugsweise über die zuvor beschriebenen Schritte a), b) und c). Das Verfahren zur Herstellung von gummimodifiziertem Bitumen über die Schritte a), b) und c) ist somit ebenfalls Gegenstand dieser Erfindung.

**Weitere bevorzugte Ausführungsform**

In einer Ausführungsform enthält das gummimodifizierte Bitumen weitere Additive, wie Metallverbindungen/-salze, insbesondere organische Zinkverbindungen/-salze u.a. als Sulfidfänger und damit als Geruchsverminderer, die vorzugsweise in Schritt c) zugemischt werden.

Die Menge an Additiven beträgt vorzugsweise 0,1 bis 1 Gew. %.

In einer weiteren bevorzugten Ausführungsform ist das erfindungsgemäße gummimodifizierten Bitumen dadurch erhältlich, dass in Schritt c) das Reaktionsprodukt aus b) mit dem Bitumen und mit Gestein vermischt.

Bei Gestein im Sinne der Erfindung handelt es sich vorzugsweise um natürliche Gesteinskörnungen, vorzugsweise gemäß DIN EN 13043, die vorzugsweise einer mechanischen Aufbereitung, wie beispielsweise Brechen und Absieben, unterzogen worden sind.

Gesteinskörnungen, die für Asphaltmischgut für den Bau von Verkehrsflächen eingesetzt werden, müssen den Anforderungen der DIN EN 13043 bzw. der TL Gestein-StB 04 entsprechen. Asphaltdeckschichtmischgut besteht aus Gesteinskörnungen bis zu einem Größtkorn von 16 mm.

Die Anforderungen an Gesteinskörnungen werden unter anderem in der DIN 18196 Bodenklassifikation für bautechnische Zwecke und den Technischen Lieferbedingungen für Gesteinskörnung im Straßenbau, TL Gestein-StB, Ausgabe 2004 (S. 11) definiert.

Das Gestein liegt dabei vorzugsweise entweder in ungebrochener Form (als Rundkorn), insbesondere als Kies, Sand, Schotter und Splitt; oder in gebrochener Form vor.

Die Menge an Gestein beträgt vorzugsweise bis zu 95 Gew. %, vorzugsweise 90 bis 95 Gew%, bezogen auf die Gesamtmenge an gummimodifiziertem Bitumen.

In den Fällen in denen das gummimodifizierte Bitumen auch noch Gestein beinhaltet, spricht man von Asphalt.

**Weiterer Gegenstand der Erfindung**

Ein weiterer Gegenstand der vorliegenden Erfindung ist somit Asphalt, enthaltend das erfindungemäß gummimodifizierte Bitumen.

Bei Asphalt im Sinne der Erfindung handelt es sich um eine natürliche oder technisch hergestellte Mischung enthaltend gummimodifiziertes Bitumen und Gestein (Gesteinskörnungen). Diese wird vorzugsweise im Straßenbau für Fahrbahnbefestigungen, im Hochbau für Bodenbeläge, im Wasserbau und im Deponiebau zur Abdichtung verwendet. Das Mischungsverhältnis liegt vorzugsweise bei 90-95 Gew.-% Gestein/ Gesteinskörnung und ca. 5-10 Gew.-% Bitumen. Dieses Verhältnis kann jedoch nach oben oder unten verändert werden. Die beigegebene Menge (sogenannter Bindemittelgehalt) und die Härte (also die Bindemittelsorte) des Bitumens verändern das Materialverhalten wesentlich.

Die Funktion des Bitumens, das etwa 4-7% des Straßenbelags ausmacht, ist die eines Bindemittels für das Gesteinsgerüst. Durch dieses Bindemittel bekommt Asphalt inneren Zusammenhalt. Es ist daher von hoher Bedeutung, dass das Bitumen mit hoher Bindungskraft an der Gesteinsoberfläche haftet.

Bei dem Bitumen wird dabei vorzugsweise das erfindungsgemäße gummimodifizierte Bitumen eingesetzt. In Bezug auf das gummimodifizierte Bitumen wird auf die obigen Ausführungen verwiesen.

Der erfindungsgemäße Asphalt wird vorzugsweise dadurch erhalten, dass

a) vulkanisiertes Gummi mit 1 bis 5 Gew. % mindestens eines Dialkylpolysulfids der Formel (I)

$$R^1\text{-}S_x\text{-}R^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht, unter mechanischer Beanspruchung vermischt und auf Temperaturen bis 130°C erhitzt wird,

b) das Reaktionsprodukt aus a) bei 130-150°C für weniger als 20 Minuten, vorzugsweise 1 bis 18 Minuten, getempert und

c) das Reaktionsprodukt aus b) mit dem Bitumen vermischt wird, wobei anschließend die Vermischung des erfindungsgemäßen Bitumens mit dem Gestein erfolgt, vorzugsweise mittels Doppelwellen-Chargen-Mischer.

Alternativ dazu kann der erfindungsgemäße Asphalt gummimodifizierte Bitumen auch in situ erzeugt werden, in dem

a) vulkanisiertes Gummi mit 1 bis 5 Gew. % mindestens eines Dialkylpolysulfids der Formel (I)

$$R^1\text{-}S_x\text{-}R^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht, unter mechanischer Beanspruchung vermischt und auf Temperaturen bis 130°C erhitzt wird,

b) das Reaktionsprodukt aus a) bei 130-150°C für weniger als 20 Minuten, vorzugsweise 1 bis 18 Minuten, getempert und

c) anschließend mit Gestein und Bitumen, vorzugsweise in einem Doppelwellen-Chargen-Mischer, vermischt wird.

In Bezug auf die Definitionen für x, $R^1$ und $R^2$, die Einsatzstoffe und Verfahrensparameter und bevorzugten Ausführungsformen wird auf die obigen Ausführungen zu dem erfindungsgemäßen gummimodifizierten Bitumen verwiesen.

**Weiterer Gegenstand der Erfindung**

Ein weiterer Gegenstand der vorliegenden Erfindung ist die Verwendung des erfindungsgemäßen gummimodifizierten Bitumen im Hochbau zur Abdichtung von Gebäudeteilen gegen Wasser, wie beispielsweise Bitumendachbahnen zur Dachabdichtung, Schutz von Stahl gegen Korrosion und im Straßenbau als Bindemittel für die Gesteinskörnungen im Asphalt, vorzugsweise als Straßenbelag.

Die vorliegende Erfindung wird anhand der nachfolgenden Beispiele näher erläutert, wobei die vorliegende Erfindung keinesfalls auf die Beispiele beschränkt ist.

**Versuchsbeispiele:**

Es wurden jeweils 200 g kaltvermahlenes Gummimehl des Typs K 0204 der Fa. MRH Mülsener Rohstoff- und Handelsgesellschaft mbH mit einer Partikelgröße von 0,2-0,4 mm und einem Polymeranteil von 58 Gew.% vorgelegt und mit 2,5% Dioctylpentasulfid als Dialkylpolysulfid bei 140°C zugeben und mit einem modifizierten Ankerrührer mit zwei Flügeln und mit der Rührgeschwindigkeit von 180 rpm gerührt.

Nach der Zudosierung des Dioctylpentasulfid wurde die Mischung bei einer Temperatur von 140°C über einen Zeitraum von 10 bis 40 Minuten getempert. Zum Evaluieren der Löslichkeit in Bitumen diente die Extraktion in Toluol gemäß der Norm ISO 1407:2011 als Modell. Dabei gilt, je höher der extrahierbare Anteil in Toluol, desto höher ist die Löslichkeit in Bitumen. Die Veränderung des Toluol-extrahierbaren Anteils (ISO 1407:2011) ist in der Tabelle 1 aufgeführt.

Tabelle 1

| Temperzeit bei der Behandlung mit 2,5 Gew. % Dioctylpentasulfid bei 140°C | Toluol-extrahierbarer Anteil [%] |
|---|---|
| 0 min | 8 |
| 10 min | 13 |
| 15 min | 19 |
| 20 min | 16-17 |
| 40 min | 19 |

Die Vergleichsprobe ohne Dioctylpentasulfid ergab einen Toluol-extrahierbaren Anteil von 8 %, was auch erhalten wird bei Zugabe von 2,5 Gew. % Dioctylpentasulfid ohne Temperung.

Überraschenderweise stellte sich schon nach 15 Minuten ein extrahierbarer Anteil ein, der auch nach 40 min nicht überschritten wurde. Dies zeigt, dass die Löslichkeitsverbesserung durch Tempern schon nach 15 Minuten (min) erzielt wurde.

Demnach wurden die elastischen Eigenschaften eines erfindungsgemäß Gummi-modifizierten Bitumens nach einer Temperzeit von 15 Minuten bestimmt.

Zur Bestimmung der elastischen Eigenschaften wurde gemäß DIN EN 16659 (2013) ein "Multiple Stress Creep and Recoverey Test (MSCR-Prüfung)" durchgeführt.

Bei diesem Test, der die Belastungsverhältnisse auf der Strasse besser wiederspiegelt als oszillierende DSR-Messungen, wurden in 10 Belastungszyklen mit einer Belastungsphase mit konstanter Scherbeanspruchung von 1 Sekunde und eine darauf folgende Entlastungsphase von 9 Sekunden Dauer die Rückverformung in % (R Wert) bestimmt. Dieser Test wurde mit drei Laststufen von 0,1 kPa, 1,6 kPa und 3,2 kPa durchgeführt. Die Deformationen während der kraftgeregelten Zyklen wurden in drei Deformationsgrößen unterteilt erfasst:

Die maximale Dehnung ist dabei die Dehnung innerhalb der Belastungsphase, die bleibende Dehnung ist die am Ende der Entlastungsphase verbleibende Dehnung und die viskoelastische Dehnung quantifiziert den Rückgang der Dehnung innerhalb der Entlastungsphase.

Aus diesen Dehnungen wurden die Kennwerte Rückverformung R und Nachgiebigkeit J berechnet:

Rückformung R = (viskoelastische Dehnung) / (maximale Dehnung) x 100 [ %]

Nachgiebigkeit J = (bleibende Dehnung) / (Scherspannung) [1/kPa]

Für den "Multiple Stress Creep and Recoverey (MSCR)-Test wurden folgende Proben eingesetzt: GmB wird dabei als Abkürzung für Gummimpodifiziertes Bitumen benutzt.

Basis für das GmB ist Gummimehl des Typs K 0204 der Fa. MRH Mülsener Rohstoff- und Handelsgesellschaft mbH mit einer Partikelgröße von 0,2-0,4 mm und einem Polymeranteil von 58 Gew.%.

Als Polysulfid (PS) wurde Dioctylpentasulfid des Typs BA CR36 der Lanxess Deutschland GmbH eingesetzt

**A:** Bitumen 50/70 (Nordbit)
**B1:** GmB mit 15% Gummi ohne Polysulfid, Mischzeit: 30 min, Reifezeit: 60 min
**B2:** GmB mit 15% Gummi ohne Polysulfid, Mischzeit: 15 min, Reifezeit: 60 min
**C1:** GmB, mit 15% Gummi mit 2,5 Gew.% PS, erfindungsgemäß vorbehandelt: Temperzeit Tz: 15 Min bei 140°C, Mischzeit: 30 min, Reifezeit: 60 min

**C2:** GmB, 15% Gummi mit 2,5 Gew.% PS, erfindungsgemäß vorbehandelt: Temperzeit Tz: 15 Min bei 140°C, Mischzeit: 15 min, Reifezeit: 60 min

**D1:** GmB, 15% Gummi mit 2,5 Gew.% PS, vorbehandelt gemäß EP3337851, Temperzeit Tz: 20 Min bei 140°C, Mischzeit: 30 min, Reifezeit: 60 min

**D2:** GmB, 15% Gummi mit 2,5 Gew.% PS, vorbehandelt gemäß EP3337851, Temperzeit Tz: 20 Min bei 140°C, Mischzeit: 15 min, Reifezeit: 60 min

Die Proben B1 - D2 wurden dabei wie folgt hergestellt.

B1 und B2 (Vgl.):

Kaltvermahlenes Gummimehl des Typs K 0204 mit einer Partikelgröße von 0,2-0,4 mm wurden mit einem modifizierten Ankerrührer mit zwei Flügeln und mit der Rührgeschwindigkeit von ca. 180 rpm in Bitumen 50/70 der Firma NordBit GmbH &Co. KG eingerührt, bis der Gummianteil 15 % der Gesamtmischung ausmachte. Die Gummi-Bitumenmischung wurde 30 bzw. 15 Minuten bei 180°C gerührt ("Mischzeit"), danach 60 min bei 180°C im Trockenschrank stehen gelassen ("Reifezeit"), um den Löseprozeß zu vervollständigen.

C1 und C2 (erfindungsgemäß):

In einem Versuch wurden jeweils 200 g kaltvermahlenes Gummimehl des Typs K 0204 mit einer Partikelgröße von 0,2-0,4 mm mit 2,5% Dioctylpentasulfid zugeben und mit einem modifizierten Ankerrührer mit zwei Flügeln und mit der Rührgeschwindigkeit von ca. 180 rpm gerührt, während die Mischung auf 130°C aufgeheizt wurde. Anschließend wurde die Gummimischung auf 140°C erwärmt und 15 Minuten getempert. Nach dem Tempern wurde Bitumen 50/70 der Firma NordBit GmbH &Co. KG zugegeben, bis der Gummianteil 15% der Gesamtmischung ausmachte. Die Gummi-Bitumenmischung wurde 30 Minuten bei 180°C gerührt ("Mischzeit"), danach 60 min bei 180°C im Trockenschrank stehen gelassen ("Reifezeit"), um den Löseprozeß zu vervollständigen.

D1 und D2 gemäß EP3337851 mit 2,5% Dioctylpentasulfid (vgl):

In einem Versuch wurden jeweils 200 g kaltvermahlenes Gummimehl des Typs K 0204 der Fa. MRH Mülsener Rohstoff- und Handelsgesellschaft mbH mit einer Partikelgröße von 0,2-0,4 mm mit 2,5% Dioctylpentasulfid als Dialkylpolysulfid zugeben und mit einem modifizierten Ankerrührer mit zwei Flügeln und mit der Rührgeschwindigkeit von ca. 180 rpm gerührt, während die Mischung auf 130°C aufgeheizt wurde.

Anschließend wurde die Gummimischung auf 140°C erwärmt und 20 Minuten getempert. Nach dem Tempern wurde Bitumen 50/70 der Firma NordBit GmbH &Co. KG zugegeben, bis der Gummianteil 15% der Gesamtmischung ausmachte. Die Gummi-Bitumenmischung wurde 30 Minuten bei 180°C gerührt ("Mischzeit"), danach 60 min bei 180°C im Trockenschrank stehen gelassen ("Reifezeit"), um den Löseprozeß zu vervollständigen.

Die Messergebnisse des MSCR Meßverfahren gemäß DIN EN 16659 sind in Tabelle 2 aufgeführt. Der Test wurde bei einer Temperatur von 60°C durchgeführt.

Tabelle 2:

| **Probe** | | **A** Bitumen 50/70 **Vgl.** | **B1** ohne PS **Vgl.** | **B2** ohne PS **Vgl.** | **C1** mit PS, Tz = 15 min **Erf.** | **C2** mit PS, Tz = 15 min **Erf.** | **D1** mit PS, Tz = 20 min **Vgl.** | **D2** mit PS Tz = 20 min **Vgl.** |
|---|---|---|---|---|---|---|---|---|
| **Eigenschaft** | Misch-/ Reifezeit bei 180°C | - | 30/60 | 15/60 | 30/60 | 15/60 | 30/60 | 15/60 |
| R (0,1 kPa) | | 0,8 | 40,7 | 35,9 | 60,5 | 63,8 | 48,3 | 49,1 |
| R (1,6 kPa) | [%] | -0,6 | 34,8 | 30,8 | 52,0 | 54,8 | 35,4 | 36,9 |
| R (3,2 kPa) | | -1,1 | 27,2 | 23,3 | 42,1 | 44,5 | 26,0 | 21,1 |

(fortgesetzt)

| Probe | | A<br>Bitumen<br>50/70 **Vgl.** | B1<br>ohne<br>PS **Vgl.** | B2<br>ohne<br>PS **Vgl.** | **C1** mit PS,<br>Tz = 15<br>min **Erf.** | **C2** mit PS,<br>Tz = 15<br>min **Erf.** | **D1** mit PS,<br>Tz = 20<br>min **Vgl.** | **D2** mit PS<br>Tz = 20<br>min **Vgl.** |
|---|---|---|---|---|---|---|---|---|
| J (0,1 kPa) | | 3,649 | 0,179 | 0,205 | 0,135 | 0,130 | 0,194 | 0,193 |
| J (1,6 kPa) | [1/kPa] | 3,838 | 0,203 | 0,227 | 0,170 | 0,167 | 0,258 | 0,231 |
| J (3,2 kPa) | | 3,973 | 0,241 | 0,268 | 0,214 | 0,214 | 0,315 | 0,313 |
| Erf.= erfindungsgemäß, Vgl: Vergleichsversuch, Tz = Temperzeit, PS = Polysulfid | | | | | | | | |

Wie aus Tabelle 2 ersichtlich, ist die Rückformung des belasteten Bitumenformkörpers bei dem erfindungsgemäß hergestellten Gummimodifizierten Bitumen (GmB) mit der kurzen Vorbehandungszeit des eingesetzten Altgummis von unter 20 min wesentlich höher und entsprechend die Nachgiebigkeit kleiner. Insbesondere ist der R- Wert (prozentuale Rückstellung) des GmB bei der höchsten Laststufe 3,2 MPa unter Verwendung des Gummis mit 15 Minuten Temperzeit (während der Vorbehandlung mit dem Polysulfid) um fast den Faktor 1,5 besser als bei den gummimodifizierten Bitumen, welches entweder mit nicht vorbehandeltem Gummi (kein Polysulfid) oder mit Gummi, welches 20 min, d.h. über eine längere Temperzeit mit dem Polysulfid vorbehandelt war, hergestellt wurde.

Weiterhin sind die J-Werte, ein Maß für die Empfindlichkeit des Bitumens auf verformende Kräfte) bei dem erfindungsgemäß behandelten Gummi am besten.

Eindrucksvoll wird so anhand der Beispiele gezeigt, dass durch die erfindungsgemäße Vorbehandlung des Gummis mit der verkürzten Temperzeit von weniger als 20 Minuten die elastischen Eigenschaften (R und J) damit modifizierten Bitumens bei Temperaturen von 60°C deutlich verbessert werden konnte. Der direkte Vergleich von gummimodifiziertem Bitumen bei Temperzeiten von 15 bzw. 20 Minuten zeigt überraschenderweise deutlich verbesserte R- und J- Werte des MSCR-Testes bei verkürzter Temperzeit.

**Patentansprüche**

1.  Gummimodifiziertes Bitumen erhältlich dadurch, dass

    a) vulkanisiertes Gummi mit 1 bis 5 Gew.% mindestens eines Dialkylpolysulfids der Formel (I)

    $$R^1\text{-}S_x\text{-}R^2 \qquad (1),$$

    wobei $R^1$ und $R^2$ gleich oder verschieden sein können und für einen linearen oder verzweigten $C_1$-$C_{18}$-Alkylrest stehen und x für die Zahlen 3 bis 12 steht,
    unter mechanischer Beanspruchung vermischt und auf Temperaturen bis 130°C erhitzt wird,
    b) das Reaktionsprodukt aus a) bei 130-150°C für weniger als 20 Minuten, vorzugsweise 1 bis 18 Minuten, getempert wird und
    c) das Reaktionsprodukt aus b) mit dem Bitumen vermischt wird.

2.  Gummimodifiziertes Bitumen nach Anspruch 1, **dadurch gekennzeichnet, dass** das Dialkylpolysulfid der Formel (I) Dioctylpentasulfid und/oder Dioctyltetrasulfid ist.

3.  Gummimodifiziertes Bitumen nach Anspruch 1 oder 2, **dadurch gekennzeichnet, dass** die Temperzeit 5 bis einschließlich 15 Minuten beträgt.

4.  Gummimodifiziertes Bitumen nach einem der Ansprüche 1 bis 2, **dadurch gekennzeichnet, dass** Schritt a) und/oder Schritt c) unter mechanischer Beanspruchung erfolgen.

5.  Gummimodifiziertes Bitumen nach einem der Ansprüche 1 bis 2, **dadurch gekennzeichnet, dass** in Schritt c) das Reaktionsprodukt aus b) mit dem Bitumen und Gestein vermischt wird.

6.  Verfahren zur Herstellung einer gummimodifizierten Mischung nach einem der Ansprüche 1 bis 5, **dadurch gekennzeichnet, dass**

a) vulkanisiertes Gummi mit 1 bis 5 Gew.% mindestens eines Dialkylpolysulfids der Formel (I)

$$R^1\text{-}S_x\text{-}R^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht,
unter mechanischer Beanspruchung vermischt und auf Temperaturen bis 130°C erhitzt wird,
b) das Reaktionsprodukt aus a) bei 130-150°C für weniger als 20 Minuten, vorzugsweise 1 bis 18 Minuten, getempert wird und
c) das Reaktionsprodukt aus b) mit dem Bitumen und gegebenenfalls Gestein vermischt wird.

7. Verwendung einer gummimodifizierten Mischung nach einem der Ansprüche 1 bis 5 im Hochbau zur Abdichtung von Gebäudeteilen gegen Wasser als Bitumendachbahnen zur Dachabdichtung, zum Schutz von Stahl gegen Korrosion und im Straßenbau als Bindemittel für die Gesteinskörnungen im Asphalt als Straßenbelag.

8. Asphalt, enthaltend gummimodifiziertes Bitumen nach einem der Ansprüche 1 bis 5.

9. Verfahren zur Herstellung von Asphalt nach Anspruch 8, **dadurch gekennzeichnet, dass** gummimodifizierte Bitumen wird dabei so erhalten, dass

a) vulkanisiertes Gummi mit 1 bis 5 Gew. % mindestens eines Dialkylpolysulfids der Formel (I)

$$R^1\text{-}S_x\text{-}R^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht, unter mechanischer Beanspruchung vermischt und auf Temperaturen bis 130°C erhitzt wird,
b) das Reaktionsprodukt aus a) bei 130-150°C für weniger als 20 Minuten, vorzugsweise 1 bis 18 Minuten, getempert und
c) das Reaktionsprodukt b) mit dem Bitumen vermischt wird, wobei anschließend die Vermischung des erfindungsgemäßen Bitumens mit dem Gestein erfolgt, vorzugsweise mittels Doppelwellen-Chargen-Mischer

oder alternativ

a) vulkanisiertes Gummi mit 1 bis 5 Gew. % mindestens eines Dialkylpolysulfids der Formel (I)

$$R^1\text{-}S_x\text{-}R^2 \qquad (1),$$

wobei $R^1$ und $R^2$ gleich oder verschieden sein können und für einen linearen oder verzweigten $C_1$-$C_{18}$-Alkylrest stehen und x für die Zahlen 3 bis 12 steht, unter mechanischer Beanspruchung vermischt und auf Temperaturen bis 130°C erhitzt wird,
b) das Reaktionsprodukt aus a) bei 130-150°C für weniger als 20 Minuten, vorzugsweise 1 bis 18 Minuten, getempert und anschließend
c) das Reaktionsprodukt aus b) mit dem Gestein und Bitumen, vorzugsweise in einem Doppelwellen-Chargen-Mischer, vermischt wird.

## Claims

1. Rubber-modified bitumen obtainable when

a) vulcanized rubber and 1% to 5% by weight of at least one dialkyl polysulfide of formula (I),

$$R^1\text{-}S_x\text{-}R^2 \qquad (1),$$

wherein $R^1$ and $R^2$ may be identical or different and represent a linear or branched $C_1$-$C_{18}$-alkyl radical and x represents numbers from 3 to 12, are mixed and heated to temperatures up to 130°C under mechanical stress,
b) the reaction product from a) is heat treated at 130-150°C for less than 20 minutes, preferably 1 to 18 minutes, and

c) the reaction product from b) is mixed with the bitumen.

2. Rubber-modified bitumen according to Claim 1, **characterized in that** the dialkyl polysulfide of formula (I) is dioctyl pentasulfide and/or dioctyl tetrasulfide.

3. Rubber-modified bitumen according to Claim 1 or 2, **characterized in that** the heat treatment time is 5 to 15 minutes inclusive.

4. Rubber-modified bitumen according to either of Claims 1 to 2, **characterized in that** step a) and/or step c) are carried out under mechanical stress.

5. Rubber-modified bitumen according to either of Claims 1 to 2, **characterized in that** in step c) the reaction product from b) is mixed with the bitumen and aggregate.

6. Process for producing a rubber-modified mixture according to any of Claims 1 to 5, **characterized in that**

   a) vulcanized rubber and 1% to 5% by weight of at least one dialkyl polysulfide of formula (I),

   $$R^1\text{-}S_x\text{-}R^2 \qquad (1),$$

   wherein $R^1$ and $R^2$ may be identical or different and represent a linear or branched $C_1$-$C_{18}$-alkyl radical and x represents numbers from 3 to 12, are mixed and heated to temperatures up to 130°C under mechanical stress,
   b) the reaction product from a) is heat treated at 130-150°C for less than 20 minutes, preferably 1 to 18 minutes, and
   c) the reaction product from b) is mixed with the bitumen and optionally aggregate.

7. Use of a rubber-modified mixture according to any of Claims 1 to 5 in high-rise construction for sealing building parts against water as bitumen roof membranes for roof sealing, for protection of steel against corrosion and in roadbuilding as a binder for aggregate granulations in asphalt as a road surface.

8. Asphalt comprising rubber-modified bitumen according to any of Claims 1 to 5.

9. Process for producing asphalt according to Claim 8, **characterized in that** rubber-modified bitumen is obtained when

   a) vulcanized rubber and 1% to 5% by weight of at least one dialkyl polysulfide of formula (I),

   $$R^1\text{-}S_x\text{-}R^2 \qquad (1),$$

   wherein $R^1$ and $R^2$ may be identical or different and represent a linear or branched $C_1$-$C_{18}$-alkyl radical and x represents numbers from 3 to 12, are mixed and heated to temperatures up to 130°C under mechanical stress,
   b) the reaction product from a) is heat treated at 130-150°C for less than 20 minutes, preferably 1 to 18 minutes, and
   c) the reaction product b) is mixed with the bitumen, wherein this is followed by mixing of the bitumen according to the invention with the aggregate, preferably using a twin-shaft batch mixer

   or alternatively

   a) vulcanized rubber and 1% to 5% by weight of at least one dialkyl polysulfide of formula (I),

   $$R^1\text{-}S_x\text{-}R^2 \qquad (1),$$

   wherein $R^1$ and $R^2$ may be identical or different and represent a linear or branched $C_1$-$C_{18}$-alkyl radical and x represents numbers from 3 to 12, are mixed and heated to temperatures up to 130°C under mechanical stress,
   b) the reaction product from a) is heat treated at 130-150°C for less than 20 minutes, preferably 1 to 18 minutes, and subsequently
   c) the reaction product from b) is mixed with the aggregate and bitumen, preferably in a twin-shaft batch mixer.

**Revendications**

1. Bitume modifié par un caoutchouc pouvant être obtenu en ce que

    a) un caoutchouc vulcanisé est mélangé sous contrainte mécanique avec 1 à 5 % en poids d'au moins un polysulfure de dialkyle de formule (I)

    $$R^1\text{-}S_x\text{-}R^2 \qquad (1),$$

    $R^1$ et $R^2$ pouvant être identiques ou différents et représentant un radical $C_{1\text{-}18}$-alkyle linéaire ou ramifié et x représentant les nombres 3 à 12, et est chauffé à des températures jusqu'à 130 °C,
    b) le produit de réaction de a) est recuit à une température de 130 à 150 °C pendant moins de 20 minutes, de préférence 1 à 18 minutes, et
    c) le produit de réaction de b) est mélangé avec le bitume.

2. Bitume modifié par un caoutchouc selon la revendication 1, **caractérisé en ce que** le polysulfure de dialkyle de formule (I) est le pentasulfure de dioctyle et/ou le tétrasulfure de dioctyle.

3. Bitume modifié par un caoutchouc selon la revendication 1 ou 2, **caractérisé en ce que** le temps de recuit est de 5 à 15 minutes inclus.

4. Bitume modifié par un caoutchouc selon l'une quelconque des revendications 1 et 2, **caractérisé en ce que** l'étape a) et/ou l'étape c) sont réalisées sous contrainte mécanique.

5. Bitume modifié par un caoutchouc selon l'une quelconque des revendications 1 et 2, **caractérisé en ce que** dans l'étape c), le produit de réaction de b) est mélangé avec le bitume et des pierres.

6. Procédé pour la préparation d'un mélange modifié par un caoutchouc selon l'une quelconque des revendication 1 à 5, **caractérisé en ce que**

    a) un caoutchouc vulcanisé est mélangé sous contrainte mécanique avec 1 à 5 % en poids d'au moins un polysulfure de dialkyle de formule (I)

    $$R^1\text{-}S_x\text{-}R^2 \qquad (1),$$

    $R^1$ et $R^2$ pouvant être identiques ou différents et représentant un radical $C_{1\text{-}18}$-alkyle linéaire ou ramifié et x représentant les nombres 3 à 12, et est chauffé à des températures jusqu'à 130 °C,
    b) le produit de réaction de a) est recuit à une température de 130 à 150 °C pendant moins de 20 minutes, de préférence 1 à 18 minutes, et
    c) le produit de réaction de b) est mélangé avec le bitume et éventuellement des pierres.

7. Utilisation d'un mélange modifié par un caoutchouc selon l'une quelconque des revendications 1 à 5 dans le bâtiment pour l'étanchéification de parties de bâtiments contre l'eau en tant que bandes de toiture en bitume pour l'étanchéification de toiture, pour la protection d'acier contre la corrosion et la construction de routes en tant que liant pour les granulats dans l'asphalte en tant que tapis routier.

8. Asphalte, contenant un bitume modifié par un caoutchouc selon l'une quelconque des revendications 1 à 5.

9. Procédé pour la préparation d'asphalte selon la revendication 8, **caractérisé en ce qu'**un bitume modifié par un caoutchouc est en l'occurrence obtenu **en ce que**

    a) un caoutchouc vulcanisé est mélangé sous contrainte mécanique avec 1 à 5 % en poids d'au moins un polysulfure de dialkyle de formule (I)

    $$R^1\text{-}S_x\text{-}R^2 \qquad (1),$$

    $R^1$ et $R^2$ pouvant être identiques ou différents et représentant un radical $C_{1\text{-}18}$-alkyle linéaire ou ramifié et x représentant les nombres 3 à 12, et est chauffé à des températures jusqu'à 130 °C,

b) le produit de réaction de a) est recuit à une température de 130 à 150 °C pendant moins de 20 minutes, de préférence 1 à 18 minutes, et

c) le produit de réaction de b) est mélangé avec le bitume, par la suite le mélange du bitume selon l'invention avec les pierres est réalisé, de préférence au moyen d'un mélangeur de charge à double arbre

ou en variante

a) un caoutchouc vulcanisé est mélangé sous contrainte mécanique avec 1 à 5 % en poids d'au moins un polysulfure de dialkyle de formule (I)

$$R^1\text{-}S_x\text{-}R^2 \qquad (1),$$

$R^1$ et $R^2$ pouvant être identiques ou différents et représentant un radical $C_{1\text{-}18}$-alkyle linéaire ou ramifié et x représentant les nombres 3 à 12, et est chauffé à des températures jusqu'à 130 °C,

b) le produit de réaction de a) est recuit à une température de 130 à 150 °C pendant moins de 20 minutes, de préférence 1 à 18 minutes, et

c) le produit de réaction de b) est ensuite mélangé avec les pierres et le bitume, de préférence dans un mélangeur de charge à double arbre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4554313 A
- EP 3337851 A

**In der Beschreibung aufgeführte Nicht-Patentliteratur**

- Shell Bitumen Handbook. Shell UK, 2003, 79